# EUROPEAN PATENT SPECIFICATION

(11) **EP 3 368 639 B1**
(45) Date of publication and mention of the grant of the patent: **11.03.2020**
(21) Application number: 15707407.1
(22) Date of filing: 29.01.2015
(51) Int. Cl.: C10L 1/02, C10L 1/18, C10L 1/14, C10L 10/02, C10L 1/19, C10L 1/185, C10L 1/23

(54) **FORMULATION OF A NEW DIESEL FUEL SUITABLE FOR DIESEL ENGINES**
FORMULIERUNG EINES NEUEN DIESELBRENNSTOFFES GEEIGNET FÜR DIESELMOTOREN
FORMULATION D'UN NOUVEAU COMBUSTIBLE DIESEL POUR MOTEURS DIESEL

(30) Priority: 29.01.2014 GB 201401467
(43) Date of publication of application: 05.09.2018
(73) Proprietor: Tulino, Rosario Rocco, London SW6 1SX (GB); Tulino Research & Partners Ltd., Stratford-upon-Avon, Warwickshire CV37 6AH (GB)
(72) Inventor: TULINO, Rosario Rocco, London SW6 1SX (GB)
(86) International application number: PCT/GB2015/000025
(87) International publication number: WO 2015/114292

(56) References cited:
- WO-A1-2011/073780
- US-A1- 2002 026 744
- US-A1- 2007 113 467
- US-A1- 2010 293 841
- US-A1- 2011 258 910
- US-A1- 2012 073 186
- US-B1- 8 545 702

## Description

The thermal engines with diesel cycle operation have an approximately 30% better thermodynamics performance than the ones with Otto cycle either fuelled with gasoline or GPL. The best efficiency of a diesel engine can be improved and optimized by means of the use of fuels on purpose reformulated with the aim to increase the thermodynamics performance that is the conversion to task and in terms of economic return.

The state of the art is disclosed by Application WO 2011/073780 A1 stating a fuel for diesel engines composed by the following ingredient: diethyl carbonate with a concentration of 2 to 10% of the fuel formula; at least one hydrotreated vegetable oil, with a concentration of 30 to 60% of the fuel formula, derived for example from soya oil, rape seed oil, corn oil, and sunflower oil and standard diesel fuel, ranging from 30 to 68% of the fuel formula.

The formulation subject of this invention, due to the presence of specific components properly proportioned inside the blend, improves the fuel ignition grade and thermic tone. The vegetable oils contained in the blend advantage interagency between the various components and concur to the fuel consumption and polluting output reduction. The carbon dioxide (CO₂) is reduced by about 50% and the particulate matter (PT) is reduce by about 60%.

The idea to develop a technologically useful product suitable for a large diffusion should meet also the environmental demands. The fuel formulation subject of this invention associates the engine-thermodynamic efficiency with the environmental requirement and the production, on a large scale, of the fuel shall be concordant with the environment as well as economically convenient.

Diesel engines have between 6% up to a 10% transformation decrement in mechanical work (depending on its conformation), either at low **RPM** due to a low turbulence flow, or at high RPM due to the fuel short stay in the combustion chamber. The cause is surely due to the incomplete and faulty combustion of the fuel blend because the particles with high hydrogen content burn first (low burning), while the particles at higher vaporisation (high boiling) are thermochemical decomposed generating almost pure carbon creating a reduced flammability that, in the zone with lower temperature, produces unburnt smut with forming and diffusion of yellow flame in the exhaust.

To remove originally the reasons of such critical situation it is necessary to improve the flame speed up to 120-150 meter/second in order to enhance as fast as possible the thermal energy and to homogenously reduce, as much as possible, the energy quantity that activates the overall reactions in the combustion chamber, avoiding the zones where the combustion is already delayed.

The engine manufacturers have faced the problem using motoring solutions and with the aid of various devices aimed to increase the turbulence using whirling bypass ducts and bumps on pistons. They have also used valves with deflectors and median ball with MAN system, and similar technologies.

The results are surely appreciated but they have not a general effect that can be obtained working on the fuel, that doubtless is the main cause of the problem, through the use of specific components in the blend able to reduce the causes of the before mentioned inconvenience.

The invention is defined in the appended claims.

Using in the formula diethyl carbonate we will have in the combustion chamber the suitable quantity of oxygen derived from the molecule pyrolysis as its presence in the diethyl carbonate is more than 40%. Being the oxygen a gas heavily reagent it had the atomic particularity to link itself within microseconds with the molecules with difficult combustion that are inside the blend and that are the origin of smokiness.

In the first group of components there is a specific mix of nitrates (nitromethane, amyl nitrate, 2-hexyl nitrate) generates an extremely amplified and homogenous turbulent status inside all the combustion chambers parts obviating zones with delayed or incomplete combustion.

Jojoba oil (Simmondsia chinensis) that is inside the vegetal oil blend, counteracted at pH7 and degummed, has a high Cetane number that reacts in perfect synergy with diethyl carbonate and nitrates mix, and the other oils as a part of the vegetal oil blend like camellia sasanqua (thea sasanqua), brassica carinata, jatropha curcas are perfectly compatible with the other components e consequently usable in the formula in significant quantities, approximately 30% in volume.

From trials carried out on several type of diesel engines we achieved that the best formula volumetric composition is obtained mixing in volume 40% of the two groups of components with standard diesel fuel so that the formulated fuel, subject of invention, ha a Cetane number higher than 50 and the exhausted quantity of carbon dioxide (CO_{2J} in the environment is reduced by 50% compared with the one exhausted by the standard diesel fuel as the carbon dioxide (CO₂) coming out by the vegetal oil combustion is already detracted during the vegetal plants grow.

It should be emphasized that the diethyl carbonate, as the new molecule produced for the purpose through the synthesis process already covered by an industrial patent application, is resulted from renewable sources for about its 15 80%, while the vegetable oils are resulted 100% from renewable sources.

As a matter of fact, the fuel reduce by approximately 50% its polluting emissions. In addition, the oils used in the process are farmed on top soils not reserved to agricultural food crops obviating the specific problems related to the use of agrarian soils. Using appropriate extraction techniques the vegetal oils 20 have an industrial manufacturing cost lower than crude oil.

As a result of the above process the fuel made with the formula subject of this invention answers the energetic demands (for a higher thermodynamic performance) as well as the green demands as it offers the reduction of carbon dioxide (CO₂) (about 50%) and particulate matter (about 60%) with the guarantee of a beneficial economic result due to reduction of fuel consumption and better performance in thermodynamic conversion rate.

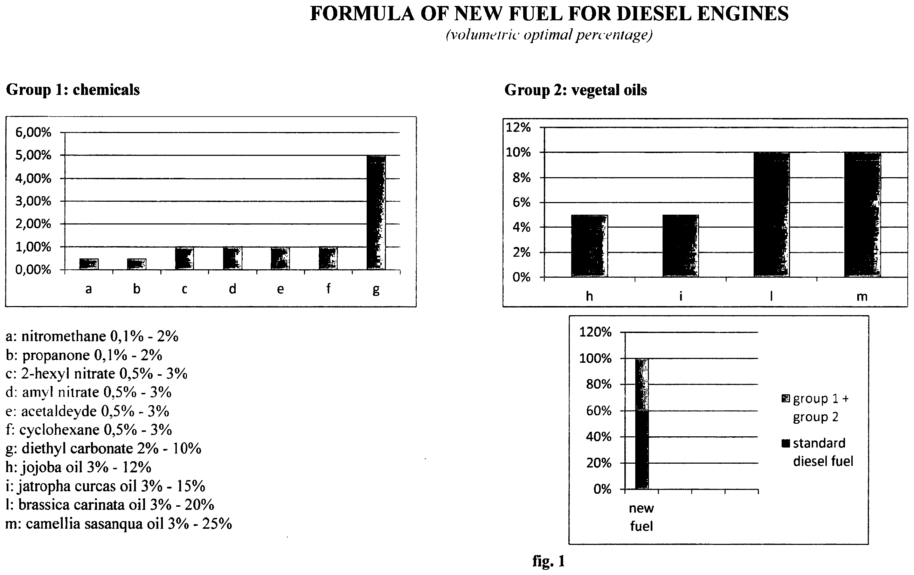

The volumetric composition of the fuel formula, subject of this invention, is stated in the fig. 1

## Claims

1. A formulation of fuel for diesel engines composed of the following ingredients:
(i) group 1 components consisting of 0,1-2 volume% nitromethane CH₃NO₂ and 0,1-2 volume% propanone CH₃-CO-CH₃ and 0,5-3 volume% 2-hexyl nitrate and 0,5-3 volume% amyl nitrate CH₃(CH₂)4ONO₂ and 0,5-3 volume% acetaldehyde CH₃CHO and 0,5-3 volume% Cyclohexane C₆H₁₂ and 2-10 volume% diethyl carbonate;
(ii) group 2 components consisting of 3-25 volume% camellia sasanqua oil and 3-20 volume% brassica carinata oil and 3-12 volume% jojoba oil and 3-15 volume% jatropha curcas;
(iii) standard diesel fuel

2. A formulation of fuel for diesel engines as claimed in claim 1, where the most preferred percentage by volume of group 1 and group 2 components is 40% of the fuel formula

3. A formulation of fuel for diesel engines as claimed in claim 1, wherein the preferable percentage by volume of diethyl carbonate is 6% of the fuel formula

4. A formulation of fuel for diesel engines as claimed in claim 1, wherein the preferable percentage by volume of nitromethane CH₃NO₂ is 0,5% of the fuel formula

5. A formulation of fuel for diesel engines as claimed in claim 1, wherein the preferable percentage by volume of 2-hexyl nitrate is 1% of the fuel formula

6. A formulation of fuel for diesel engines as claimed in claim 1, wherein the preferable percentage by volume of jojoba oil is 5% of the fuel formula

7. A formulation of fuel for diesel engines as claimed in claim 1, wherein the preferable percentage by volume of camellia sasanqua oil is 10% of the fuel formula

8. A formulation of fuel for diesel engines as claimed in claim 1, wherein the preferable percentage by volume of jatropha curcas oil is 5% of the fuel formula

9. A formulation of fuel for diesel engines as claimed in claim 1, wherein the preferable percentage by volume of brassica carinata oil is 10% of the fuel formula.

## Patentansprüche

1. Kraftstoffformulierung für Dieselmotoren, bestehend aus folgenden Bestandteilen:
(i) Komponenten der Gruppe 1, bestehend aus 0,1-2 Vol .- % NitromethanCH₃NO₂ und 0,1-2 Vol .- % Propanon CH₃-CO-CH₃ und 0,5-3 Vol.-% Dihexylnitrat und 0,5-3 Vol.-% Amylnitrat CH₃(CH₂)4ONO₂ und 0,5-3 Vol.-% Acetaldehyd CH₃CHO und 0,5-3 Vol .- % Cyclohexan C₆H₁₂ und 2-10 Vol .- % Diethylcarbonat;
(ii) Komponenten der Gruppe 2, bestehend aus 3 bis 25 Vol .- % Kamelien-Sasanqua-Öl und 3 bis 20 Vol .- % Brassica-Carinata-Öl und 3 bis 12 Vol.-% Jojoba-Öl und 3 bis 15 Vol.-% Jatropha-Curcas;
(iii) Standard-Dieselkraftstoff

2. Kraftstoffformulierung für Dieselmotoren gemäß Anspruch 1, wobei der am meisten bevorzugte Volumenprozentsatz der Komponenten der Gruppe 1 und der Gruppe 2 bei 40 % Anteil an der Kraftstoffformel liegt

3. Kraftstoffformulierung für Dieselmotoren gemäß Anspruch 1, wobei der bevorzugte Volumenprozentsatz von Diethylcarbonat 6 % der Kraftstoffformel beträgt

4. Kraftstoffformulierung für Dieselmotoren gemäß Anspruch 1, wobei der bevorzugte Volumenprozentsatz von Nitromethan CH₃NO₂ 0,5 % der Kraftstoffformel beträgt

5. Kraftstoffformulierung für Dieselmotoren gemäß Anspruch 1, wobei der bevorzugte Volumenprozentsatz von Dihexylnitrat 1 % der Kraftstoffformel beträgt

6. Kraftstoffformulierung für Dieselmotoren gemäß Anspruch 1, wobei der bevorzugte Volumenprozentsatz von Jojoba-Öl 5 % der Kraftstoffformel beträgt

7. Kraftstoffformulierung für Dieselmotoren gemäß Anspruch 1, wobei der bevorzugte Volumenprozentsatz von Kamelien-Sasanqua-Öl 10 % der Kraftstoffformel beträgt

8. Kraftstoffformulierung für Dieselmotoren gemäß Anspruch 1, wobei der bevorzugte Volumenprozentsatz von Jatropha-Curcas 5 % der Kraftstoffformel beträgt

9. Kraftstoffformulierung für Dieselmotoren gemäß Anspruch 1, wobei der bevorzugte Volumenprozentsatz von Brassica-Carinata-Öl 10 % der Kraftstoffformel beträgt

## Revendications

1. Une formulation de carburant pour moteurs diesel composée des ingrédients suivants :
(i) Composants du groupe 1 constitutés de 0,1-2 % en volume de nitrométhane CH₃NO₂ et de 0,1-2 % en volume de propanone CH₃-CO- CH₃ et 0,5-3 % en volume de 2-hexyl nitrate et 0,5-3 % en volume de amyl nitrate CH₃(CH₂)4ONO₂ et 0,5-3 % en volume de acétaldéhyde CH₃CHO et 0,5-3 % en volume de Cyclohexane C₆H₁₂ et 2-10 % en volume de carbonate de diéthyle ;
(ii) Composants du groupe 2 constitués de 3 à 25 % en volume d'huile de camélia sasanqua et de 3 à 20 % en volume d'huile de brassica carinata et de 3 à 12 % en volume d'huile de jojoba et de 3 à 15 % en volume de jatropha curcas ;
(iii) carburant diesel standard

2. Une formulation de carburant pour moteurs diesel selon la revendication 1, dans laquelle le pourcentage en volume préféré des composants du groupe 1 et du groupe 2 est de 40 % de la formule du carburant.

3. Une formulation de carburant pour moteurs diesel selon la revendication 1, dans laquelle le pourcentage en volume préférable de carbonate de diéthyle est de 6 % de la formule du carburant

4. Une formulation de carburant pour moteurs diesel selon la revendication 1, dans laquelle le pourcentage en volume préférable de nitrométhane CH₃NO₂ est égal à 0,5 % de la formule de carburant.

5. Une formulation de carburant pour moteurs diesel selon la revendication 1, dans laquelle le pourcentage en volume préférable de nitrate de 2-hexyle est égal à 1 % de la formule du carburant

6. Une formulation de carburant pour moteurs diesel selon la revendication 1, dans laquelle le pourcentage en volume préférable d'huile de jojoba est de 5 % de la formule du carburant

7. Une formulation de carburant pour moteurs diesel selon la revendication 1, dans laquelle le pourcentage en volume préférable d'huile de camellia sasanqua est de 10 % de la formule du carburant

8. Une formulation de carburant pour moteurs diesel selon la revendication 1, dans laquelle le pourcentage en volume préférable d'huile de jatropha curcas est de 5 % de la formule du carburant

9. Une formulation de carburant pour moteurs diesel selon la revendication 1, dans laquelle le pourcentage en volume préférable d'huile de brassica carinata est de 10 % de la formule du carburant
